# EUROPEAN PATENT APPLICATION

(11) **EP 3 868 518 A1**
(43) Date of publication of application: **25.08.2021**
(21) Application number: 20158591.6
(22) Date of filing: 20.02.2020
(51) Int. Cl.: B25J 5/04, B25J 9/00, B25J 15/00, B65G 61/00, F16G 13/20, B65G 1/04

(54) **ROBOT AND METHOD FOR WAREHOUSE AUTOMATION**

(71) Applicant: Ljunggren, Per Henrik, 167 71 Bromma (SE); Jensfelt, Patric, 111 37 Stockholm (SE); Timgren, Roland Henry, 175 47 Järfälla (SE)
(72) Inventor: Ljunggren, Per Henrik, 167 71 Bromma (SE); Jensfelt, Patric, 111 37 Stockholm (SE); Timgren, Roland Henry, 175 47 Järfälla (SE)
(74) Representative: Ström & Gulliksson AB

(57) **Abstract**

This disclosure presents a robot (1) for a warehouse storage rack (2) comprising a plurality of storage rack sections (2a-2i). The robot (1) is adapted to be mounted at an elevated position (7) within a storage rack section (2b) and comprises a manipulator (3) for picking up objects (4) within the storage rack section (2b) and manipulator guiding means (5) for movably supporting the manipulator (3). The manipulator guiding means (5) being configured such that the manipulator (3) can be brought to a lower position (8) than the elevated position (7). The disclosure also presents a method for automating a warehouse storage rack by mounting a robot (1) to at least one storage rack section thereof.

## Description

### Technical Field

The present disclosure generally pertains to the field of automated handling of stock-picking and in particular to robotizing a warehouse storage rack.

### Background

Warehouse storage racks in the past were fully manual, meaning that the objects supplied to and retrieved from the storage racks were handled by personnel, either by hand or by means of e.g. lift trucks.

Still today, warehouse personnel often pick a selection objects by hand from warehouse storage racks and place the objects on pallets or in roll containers for further delivery.

There exist automated warehouses, but they typically suffer from disadvantages such as high costs, limited scalability, flexibility and storage capacity. CN209160601U discloses a handling robot that is vertically movable along a chassis of a movable storage shelf. JP3376275B2 discloses a robot translatably mounted on the floor next to a storage shelf.

Objects of the embodiments of the present disclosure include obviating or at least mitigating the above disadvantages of prior art.

### Summary

Accordingly, there is provided a robot for a warehouse storage rack comprising a plurality of storage rack sections, said robot being adapted to be mounted at an elevated position within a storage rack section and comprising a manipulator for picking up objects within the storage rack section and manipulator guiding means for movably supporting the manipulator, said manipulator guiding means being configured such that the manipulator can be brought to a lower position than the elevated position.

By mean of such a robot, a warehouse storage rack can be automated, or robotized, by furnishing at least one storage rack section with a robot to obtain an automated storage rack section. The robot can be arranged on a newly produced warehouse storage rack or retrofitted to an existing warehouse storage rack.

At least one, but not all, of the storage rack sections may preferably be automated by furnishing only one, or only a subset, of the storage rack sections with a robot, thereby providing a partially automated warehouse storage rack. There are several advantages connected to partially automating a storage rack. As compared to investing in a new, fully automated storage rack, the costs for a partial automation are much lower. Further, the time required for installation, for example in only one storage rack section, is only a fraction as compared to a full automation, which may involve removing an old storage rack and installing a new one entirely. The present disclosure allows automating only a few storage rack sections, while leaving the majority non-automated. The present solution is also scalable and flexible, as the number of automated storage rack sections can easily be adapted to current needs. For example, only storage rack sections for heavy objects may be selectively automated. In addition or alternatively, only storage rack sections that are frequently visited may be selectively automated.

In many storage rack warehouses, only the objects stored in the lowermost storage rack sections are picked by warehouse personnel and packed for instance on a pallet or in a roll container for further transport. In such a case, it may be desired to automate only the lowermost storage rack sections or only the lowermost storage rack sections holding objects that are heavy, for instance having a weight of more than 10 kg. Objects stored in higher rows of the warehouse storage rack may be moved down to the automated storage rack sections in bulk, for instance by an industrial truck lifting down pallets of objects from higher rows to the lowermost row once the lowermost row is depleted.

By adapting the robot for mounting at an elevated position, the robot will not occupy valuable storage space within the automated storage rack section. A storage rack section can be dimensioned such that the objects, which may be stored on a pallet, only occupy the lower two thirds or the lower half of the storage rack section. The upper half, or the upper third, of the storage rack section will then provide room for the robot. Since the manipulator can be brought to a lower position than the elevated position, the manipulator is able to pick up objects stored below the elevated position. Preferably, the manipulator can be brought to a low position such as a lower third of the automated storage rack section height or even the floor thereof. The elevated position can also be referred to as an elevated portion and the low position can be referred to as a low portion.

The robot is preferably adapted to be mounted to a framework beam structure of the storage rack section, preferably to an upper part thereof. Advantageously, the robot is adapted to be mounted to horizontal framework beams that define the upper boundary of the storage rack section to be automated.

The manipulator guiding means of the robot should preferably be configured such that the manipulator can be brought to any position within the area of the automated storage rack section. Said area can be defined as the area spanned by the horizontal framework beams that form the automated storage rack section. The area may also be defined as a horizontal plane of the storage rack section.

The manipulator guiding means of the robot should preferably be configured such that the manipulator can be brought to a delivery area located outside the area of the automated storage rack section.

The manipulator should be able to reach any object within the automated storage rack section and supply said object to a delivery area located outside the area of the automated storage rack section. In the delivery area, warehouse personnel may receive the objects on a pallet or in a roll container for further transport. The robot may be adapted for placing the objects on a receiving body, such as a pallet or a roll container, located in the delivery area. The delivery area is typically of roughly the same length as the area of the automated storage rack section. The delivery area is located adjacent the automated storage rack section.

Said configuration can be obtained by providing manipulator guiding means that support the manipulator translatably along the longitudinal direction of the storage rack section, and translatably along the transverse direction of the storage rack section and to the delivery area. As an alternative, the manipulator guiding means may translatably support the manipulator along only one of the longitudinal and transverse directions, an in addition rotatory support the manipulator. An another alternative, the manipulator guiding means may comprise two or more rotatably connected arms which are dimensioned such that the manipulator guiding means can be brought to all positions within the area of the automated storage rack section and to a delivery area located outside the area of the automated storage rack section.

The manipulator guiding means may comprise a manipulator support structure supporting the manipulator, the manipulator support structure being configured not only to lift the manipulator but also to transfer a downward force to the manipulator and thereby urge the manipulator into engagement with an object. By urging the manipulator into engagement with the object, the manipulator and/or the object may translate and/or rotate as an object is being picked up. In this manner, a tightly packed object may be picked up by urging the manipulator into engagement with one object and thus pushing adjacent objects sideways. The manipulator may for example be adapted to be pushed down to at least partially enclose the object to be picked up. For this reason, the manipulator structure may be dimensioned with respect to the objects to be picked up.

The manipulator support structure may be telescopic and for example comprise double-acting telescopic cylinders. Preferably, the manipulator support structure is a push-pull chain. A push-pull chain is suitable for bringing the manipulator from an elevated position to a low position within the automated storage rack section, and for transferring a downward force to the manipulator. The manipulator guiding means may be configured such that in a retracted state the push-pull chain occupies very little storage space within the automated storage rack section. In particular a robot mounted at an elevated position and using a push-pull chain to reach objects in a low position can be designed to not occupy valuable storage space within the automated storage rack section.

The push-pull chain may comprise side plates held together by pivoting devices. The pivoting devices may comprise an inner element, preferably of metal, and an outer element of plastic material. In order to avoid the push-pull chain making noise during operation, the outer element may be formed by hard plastic material with an outer coating of soft plastic material such as rubber.

The manipulator guiding means may comprise an arm that supports the manipulator, the manipulator guiding means being configured such that the arm is linearly movable along the longitudinal direction of the storage rack section. In addition, the manipulator guiding means may be configured such that the arm is linearly movable along the transverse direction of the storage rack section. Preferably, the manipulator guiding means comprises an arm rotary joint mechanism allowing the arm to be rotated in a horizontal plane in addition to being linearly movable along the longitudinal and/or transverse direction.

A manipulator rotary joint mechanism may be arranged between the arm and the manipulator allowing the manipulator to be rotated in a horizontal plane. Thereby the manipulator may be aligned with an object to be picked up, and may also deliver the object as rotationally desired.

Preferably, the manipulator support structure and the arm are configured such that a portion of the manipulator support structure can be retracted inside the arm. In this way, the robot occupies very little storage space within the automated storage rack section. Furthermore, the portion of the manipulator support structure that is retracted inside the arm manipulator is protected from wear and not exposed to any dust or dirt. Preferably, at least 50 % of the manipulator support structure can be retracted inside the arm, more preferably at least 80 % or even more preferably all of the manipulator support structure.

The manipulator may comprise a rigid outer manipulator structure that is adapted to at least partially surround the object to be picked and an inner member which is adapted to generate a force between the rigid outer manipulator structure and the object such that the object can be picked up by the manipulator. Thereby a sturdy, cost-effective and reliable manipulator is provided.

The inner member, or a plurality of inner members, may be arranged along two adjacent walls of the rigid outer manipulator structure. In this way, the inner members force the object into contact with walls opposing the inner members, and thus the location of the object within the manipulator is predictable. Furthermore, by arranging inner member(s) along only two adjacent walls of the rigid outer manipulator structure the manipulator may be even more sturdy, cost-effective and reliable.

The inner member may be an inflatable member that can be inflated by a fluid, which brings the advantage that the inner member can easily and reliably generate a force between the rigid outer manipulator structure and the object. By controlling the amount of fluid provided to the inflatable member for generating the force, the object can be protected easily and reliably from overly high forces. The inflatable member can preferably be made of a material with a relatively high coefficient of friction, whereby the object is securely seized by the manipulator. The inflatable member may be a hose, which is a low cost item that may easily be replaced if necessary. A hose of suitable diameter can selectively be chosen to lift objects of various sizes.

The above-mentioned robot may be adapted to be mounted directly to the storage rack section. Alternatively, there may be provided a robot assembly comprising the robot and a robot guide structure, which is adapted to be mounted at an elevated position of the storage rack section and to support the robot. By means of such a robot guide structure, the robot may be mounted accurately and firmly to the storage rack section to be automated. In particular, the robot guide structure and the robot may be mutually designed to transfer high torques reliably, and to allow energy efficient movement of the robot. The robot guide structure is preferably adapted to be mounted to the framework beam structure of the storage rack, preferably to an upper part thereof. Advantageously, the robot guide structure is adapted to be mounted to horizontal framework beams that define the upper boundary of the storage rack section to be automated.

The above objects have further been met by a warehouse storage rack comprising a plurality of storage rack sections, said warehouse storage rack comprising at least one storage rack section comprising a robot as described, and at least one storage rack section not comprising a robot. The warehouse storage rack thereby comprises at least one automated storage rack section and at least one non-automated storage rack section.

The above objects have further been met by a method for automating a warehouse storage rack comprising a plurality of storage rack sections, said method comprising the steps of mounting a robot to at least one of the storage rack sections, said robot comprising a manipulator for picking up objects stored in the storage rack section, thereby providing at least one automated storage rack section, and leaving at least one storage rack section non-automated, thereby partially automating the warehouse storage rack in that the warehouse storage rack comprises at least one automated storage rack section and at least one non-automated storage rack section. The advantages of a partially automating a storage rack have been described above.

By the method, a robot can be retrofitted to an existing warehouse storage rack to partially automate the warehouse storage rack. The method may involve mounting the robot directly to the warehouse storage rack, or first mounting a robot guide structure as described above. The robot, or the robot guide structure, is preferably mounted to a framework beam structure of the warehouse storage rack, preferably to an upper part thereof. Advantageously, the robot or the robot guide structure is mounted to horizontal framework beams that define the upper boundary of the storage rack section to be automated.

In another aspect, the present disclosure relates to a manipulator comprising a rigid outer manipulator structure adapted to at least partially surround an object to be picked and an inner member adapted to generate a force between the rigid outer manipulator structure and the object such that the object can be picked up by the manipulator. The inner member is preferable an inflatable member. Such a manipulator may be fitted to the robot described above.

### Brief Description of the Drawings

These and other aspects, features and advantages will be apparent and elucidated from the following description of various embodiments, reference being made to the accompanying drawings, in which:
Figure 1 is a schematic side view of a warehouse storage rack that is partially automated by means of a robot mounted to, and dedicated exclusively to, a single one of the plurality of storage rack sections,
Figure 2 is an enlarged view of the robot of figure 1 showing a manipulator which is movably supported by a manipulator guiding means comprising an arm, the robot being configured to be mounted directly to a storage rack section,
Figure 3 is an enlarged view of the robot of figure 1 from above, illustrating the manipulator brought to a position outside the storage rack section, the robot being configured to be mounted to a robot guide structure which in turn is mounted to the storage rack section,
Figure 4 is a schematic cross-section through the arm of figure 2 or 3,
Figure 5 is a view from below of the manipulator of figures 1-3 showing an inner member in a deactivated state, and
Figure 6 corresponds to figure 5 but with the inner member in an activated state.

### Detailed Description of Embodiments

The present invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art.

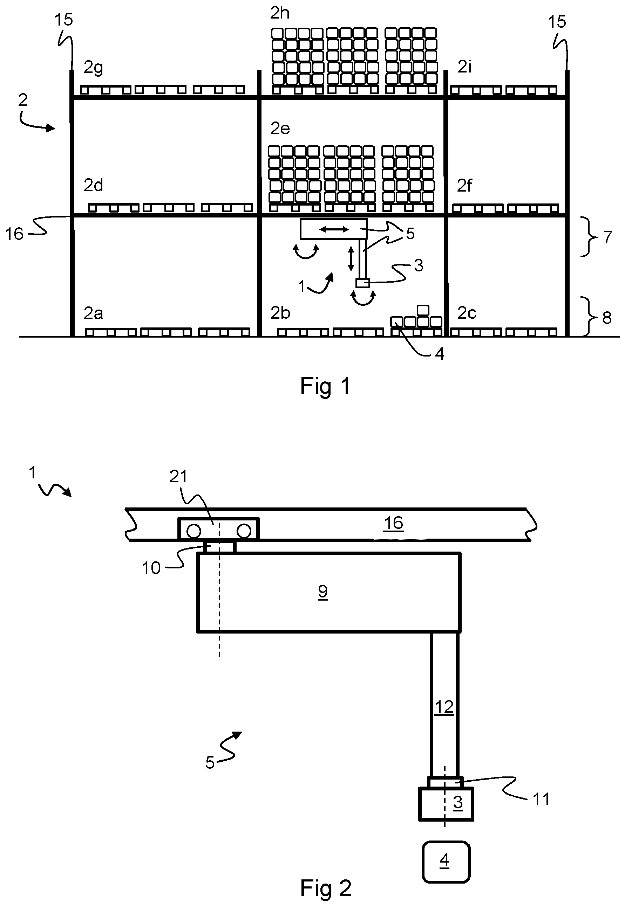

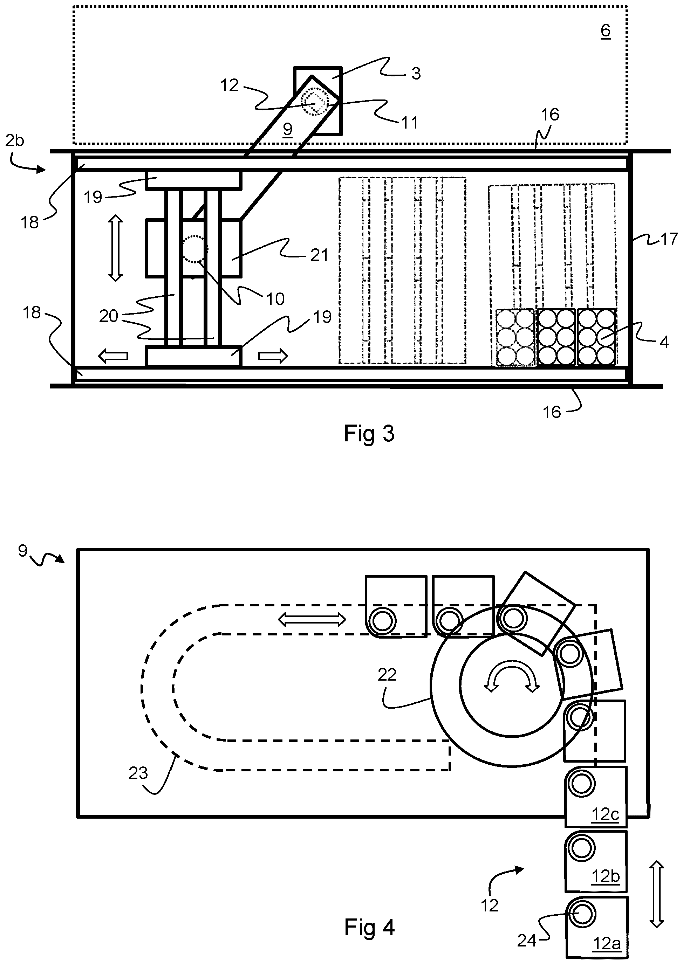

Figure 1 illustrates a fixed warehouse storage rack 2 with a plurality of, in this example nine, storage rack sections 2a-2i in which palletised objects 4 are stored. Said storage rack sections may alternatively be termed warehouse storage rack sections. The warehouse storage rack 2 is composed of a fixed framework beam structure 15, 16, 17 comprising a number of vertical framework beams 15 supporting horizontal longitudinal 16 and transverse 17 framework beams (horizontal transverse beams 17 shown in figure 3). In the present example, there are three columns and three rows of storage rack sections. The pallets of the lowermost row are placed on the floor whereas the pallets in the two upper rows are supported by storage rack shelves formed by or carried by the horizontal framework beams 16, 17. In this example, each storage rack section 2a-2f extends approximately 3 metres in the longitudinal direction of the storage rack 2 and has a height of approximately 2 metres. The depth is approximately 1.3 metres, i.e. the extension in the transverse direction is approximately 1.3 metres.

As is illustrated, the leftmost and middle storage rack sections 2a-b, 2d-e, 2g-h are dimensioned to receive three pallets positioned side-by-side with the longitudinal axes of the pallets arranged in the transverse direction of the storage rack. The rightmost storage rack sections 2c, 2f, 2i are correspondingly dimensioned to receive two pallets. The warehouse storage rack and the storage rack sections may alternatively be dimensioned to receive pallets positioned with their longitudinal axes arranged in the longitudinal direction of the storage rack.

In accordance with the present disclosure, one of the lowermost storage rack sections, in the present example the middle storage rack section 2b, is furnished with a robot 1. The storage rack section 2b with the robot 1 can be referred to as an automated warehouse storage rack section 2b, whereas the remaining storage rack sections can be referred to as non-automated warehouse storage rack sections 2a, 2c-2i. The robot is located at an elevated position 7 within the volume of the automated storage rack section 2b, which means that the robot occupies only the upper third or less of the automated storage rack section 2b volume, while leaving at least the lower two thirds free for storage of objects 2, e.g. on pallets.

Figure 2 shows the robot 1 in more detail, together with an object 4 to be automatedly handled by the robot 1. The robot 1 comprises a manipulator 3, a manipulator rotary joint mechanism 11, a manipulator support structure 12, an arm 9, an arm rotary joint mechanism 10 and an arm support structure 21. The manipulator rotary joint mechanism 11, manipulator support structure 12, arm 9, arm rotary joint mechanism 10 and arm support structure 21 are jointly referred to as a manipulator guiding means 5. The horizontal longitudinal framework beam 16 supports the arm support structure 21 of the manipulator guiding means 5 in the embodiment of figure 2.

With reference to figures 1 and 2, as is illustrated by the four double-ended arrows in figure 1, the manipulator guiding means 5 renders the manipulator 3 linearly movable along the longitudinal direction of the storage racks section 2b, linearly movable in the vertical direction, and rotary movable around two axes of rotation. As will be explained with reference to figure 3, the manipulator guiding means 5 further renders the manipulator 3 linearly movable along the transverse direction of the storage rack section 2b. The manipulator 3 can be brought to all positions within the area of the automated storage rack section 2b and can pick up objects 4 located anywhere within this area. Said area can be defined as the area spanned by the horizontal longitudinal beams 16 and horizontal transverse beams 17 that form the automated storage rack section 2b, as seen from above (see figure 3). The robot 1 is also capable of positioning the manipulator 3 in a delivery area 6 (see figure 3) located outside the area of the automated storage rack section 2b. The dimensions of the delivery area 6 correspond to the dimensions of the area of the automated storage rack section 2b. In the embodiments of the present disclosure, the length of the delivery area 6 is the same as the length of the automated storage section 2b. The delivery area 6 is located adjacent the automated storage rack section 2b.

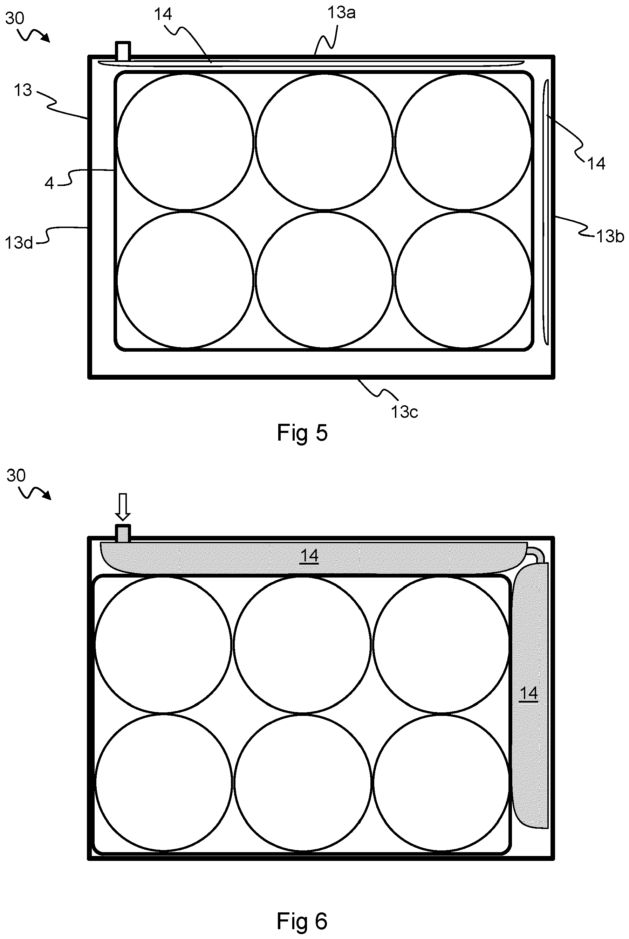

Alternative manipulators 3 may take different forms and lift objects 4 for example by means of suction cups or jaws, but in the present example a gripper 30 of the type that will be described with reference to figures 5 and 6. Importantly, the gripper 30 may be brought from an elevated position to a low position 8 within the automated storage rack section 2b to pick up objects 4 located at a low position 8 or even on the floor of the automated storage rack section 2b. Such low position 8 is here defined as the lower third of the automated storage rack section 2b volume or height.

The manipulator 3 is carried by the manipulator support structure 12, with the manipulator rotary joint mechanism 11 arranged in-between. The manipulator rotary joint mechanism 11 allows the manipulator 3 to be rotated around the longitudinal axis of the manipulator support structure 12 as is indicated by a dashed line through the manipulator rotary joint mechanism 11 in figure 2. The manipulator support structure 12 is of a kind that is able to apply a vertical force to the manipulator 3, via the manipulator rotary joint mechanism 11, and thereby urge the manipulator 3 downwards into engagement with the object 4. In other words, the manipulator support structure 12 is capable of both lifting the object 4 by means of the manipulator 3 and of pressing the manipulator 3 downwards towards the object 4. In an alternative embodiment, the manipulator support structure 12 may be telescopic such that the length thereof can be adjusted from a retracted configuration to an extended configuration. Such a manipulator support structure may comprise double-acting telescopic cylinders. In the present example, the manipulator support structure 12 is a push-pull chain 12 as will be described with reference to figure 4.

With continued reference to figure 2, the push-pull chain 12 is carried by an arm 9, more precisely a single-link arm 9. The arm 9 is attached to the horizontal longitudinal framework beam 16 by means of the arm support structure 21, with the arm rotary joint mechanism 10 arranged in-between. The arm support structure 21 is linearly movable along the horizontal longitudinal framework beam 16. The arm rotary joint mechanism 10 allows the arm 9 to be rotated around a vertical axis through the arm rotary joint mechanism 10. Said axis is indicated by a dashed line through the arm rotary joint mechanism 10.

Figure 3 illustrates the robot 1 of figure 1 from above in an embodiment including a robot guide structure 18 for mounting the robot 1 to the storage rack section 2b. Two pallets arranged within the automated storage rack section 2b are indicated by dashed lines, the rightmost pallet carrying objects 4 illustrated as plastic-wrapped bundles each containing six bottles. For reasons of legibility, no pallet is illustrated to the left beneath the robot 1, although the automated storage rack section 2b typically is beneficially filled with pallets with objects 4.

Figure 3 illustrates two robot guide structures 18 each one arranged in parallel with the longitudinal direction of the automated storage rack section 2b. A first robot guide structure 18 is arranged adjacent a first horizontal longitudinal framework beam 16 and a second robot guide structure 18 is arranged adjacent a second horizontal longitudinal framework beam 16. The robot guide structures 18 may be fixed to the respective horizontal longitudinal framework beam 16, e.g. by welding or screwing. The robot guide structures 18 may alternatively, or in addition, be fixed to the horizontal transverse framework beam(s) 17. The robot guide structures 18 are arranged at an elevated position within the automated storage rack section 2b, in the present examples at an uppermost position within the storage rack section. The robot guide structures 18 are arranged at the same vertical position as the horizontal longitudinal framework beams 16 that form the ceiling of the automated storage rack section 2b. Thus, the robot 1 is adapted to be mounted at an elevated position 7 within the storage rack section 2b, even at an uppermost position within the storage rack section 2b.

A first and a second guide runner 19 are carried by the robot guide structures 18 and are adapted to travel along the robot guide structures 18. The guide runners 19 are thus movable along the longitudinal direction of the storage rack section 2b. The first and second guide runners 19 are connected to each other by a transverse beam structure 20, which in the example of figure 3 comprises two beams. The transverse beam structure 20 carries the arm support structure 21 to which the arm rotary joint mechanism 10 is mounted. The arm support structure 21 is adapted to travel along the transverse beam structure 20. The arm support structure 21 is thus movable along the transverse direction of the storage rack section 2b. The transverse beam structure 20 may be configured such that the arm support structure 21 can be brought past the horizontal longitudinal framework beam 16 to a position outside the automated storage rack section 2b. For example, the transverse beam structure 20 may for this reason comprise a number of parallel overlapping beams which are extendable in a telescopic manner.

As is indicated by the double-ended arrow in figure 3, the arm support structure 21 is linearly movable in the transverse direction of the automated storage rack section 2b. The arrows to the left and right of the lower guide runner 19 shown in figure 3 illustrate that the guide runners (and thus the arm support structure 21) are linearly movable in the longitudinal direction of the automated storage rack section 2b.

In the embodiment of figure 2, the robot 1 is adapted to be movably mounted directly to the storage rack section to be automated, more precisely to the horizontal longitudinal framework beams 16 of said storage rack section. This can be realized by omitting the robot guide structures 18 of figure 3, and configuring the guide runners 19 for travelling on the horizontal longitudinal framework beams 16, for example on flanges of the horizontal longitudinal framework beams 16. In figure 2, this is schematically illustrated by the arm support structure 21 comprising a number of drive wheels (two illustrated in the side view). For reasons of legibility, figure 2 does not include the guide runners 19 or the transverse beam structure 20. As is understood by the skilled person, the arm support structure 21 illustrated in figure 2 can be constructed with guide runners 19 and a transverse beam structure 20 or a similar arrangement such that the arm support structure 21 is adapted to movably mount the robot 1 to the horizontal longitudinal framework beams 16. Thus, the embodiment of figure 1 also discloses a robot 1 that is adapted to be mounted at an elevated position 7 within the storage rack section 2b, even at an uppermost position within the storage rack section 2b. Such a transverse beam structure 20 may be configured such that the arm support structure 21 can be brought past the horizontal longitudinal framework beam 16 to a position outside the automated storage rack section 2b, as was described above with reference to figure 3.

Figure 4 illustrates the arm 9 of figure 2 or 3 with a push-pull chain 12 that can be completely retracted inside the arm 9. The push-pull chain 12 comprises a number of links 12a, 12b, 12c of a shape that allows the push-pull chain 12 to both push and pull, i.e. provide a compressive force as well as a tensile force. As can be seen, each link 12a, 12b, 12c comprises a flat surface or link shoulder that may cooperate with an adjacent flat surface or link shoulder of the adjoining link 12a, 12b, 12c to provide a compressive force. Push-pull chains are described in the documents US2184747A and US2045261A. In an alternative embodiment, a telescopic (not shown) manipulator support structure may be used instead of a push-pull chain and be attached to the upper wall of the arm, such that the telescopic manipulator support structure can be at least partly retracted into the volume of the arm 9.

The arm 9 further comprises a sprocket 22 adapted to drive the push-pull chain 12, and a chain trail 23 adapted to guide the chain 12 as it is retraced inside and extended from the arm 9. A curved double-ended arrow in figure 4 illustrates the rotation of the sprocket, a horizontal double-ended arrow illustrates the chain 12 moving along the chain trail 23, and a vertical double-ended arrow illustrates the chain 12 moving up and down from the arm 9. The rotating movement of the sprocket 22 is by means of the push-pull chain 12 transferred to a linear movement of the manipulator 3.

The push-pull chain 12 of the present embodiment is capable of deflection towards one side, as is described in US2184747A (in particular figure). As an alternative, the push-pull chain may be of a kind that is only capable of deflection when rendered flexible by the sprocket 22 or the chain trail 23 of figure 4, as is described in US2045261A.

The arm 9 has the shape of a rectangular cuboid and comprises an opening or an open side through which the push-pull chain extends down to the manipulator rotary joint mechanism 11 that carries the manipulator 3. The length of the push-pull chain 12 essentially corresponds to the height of the automated storage rack section 2b, such that the manipulator 3 may be brought from the upper part of the automated storage rack section 2b to the lower part thereof. In this way, the robot 1 may be arranged in the upper part without occupying storage space while still being able to reach objects 4 positioned in the lower part. The length of the arm 9 essentially corresponds to half the length of the push-pull chain 12, as the push-pull chain is folded once within the arm 9, see figure 4. In an alternative embodiment, the push-pull chain may be folded more times, e.g. three times whereby the length of the arm can be reduced further, i.e. to one third of the lent hog the push-pull chain 12. The robot occupies only the upper third, or even only the upper fourth, of the automated storage rack section 2b height when the push-pull-chain is retracted inside the volume of the arm 9.

The links 12a, 12b, 12c are made of plastic material, e.g. fibre reinforced plastic material, in order to keep the weight of the push-pull chain 12 to a minimum, even though metals such as aluminium could also be used. The pivoting devices 24 that join the sheets, or side plates, forming the links 12a, 12b, 12c, in a manner similar to the pivots r₁, r₂, r₃ of US2184747A figure 5, are made of metal and may be hollow to keep the weight down.

The pivoting devices 24 may comprise an inner metal element and an outer sleeve-shaped distance element, having the function of a roller in a conventional flat-link chain. The inner element and the outer element are schematically illustrated by the pivoting devices 24 depicted by two concentric circles in figure 4. The outer element may be of plastic material. In order to avoid the push-pull chain 12 making noise during operation, the outer element may be formed by hard plastic material with an outer coating of soft plastic material such as rubber.

Figures 5 and 6 illustrate the manipulator 3, or gripper 30, in more detail. The gripper 30 comprises an outer rigid structure 13 and two inner members 14. The outer rigid structure 13 is of a box-like shape with an open side facing downwards. In an alternative embodiment, the outer rigid structure 13 is a grid structure. The outer rigid structure 13 comprises two opposing long sides 13a, 13c and two opposing short sides 13b, 13d. The gripper 30 is in particular suitable for lifting plastic-wrapped bundles of bottles.

The form and dimension of the gripper 30 are adapted to the form and dimension of the object 4 to be picked up. In the present example, the gripper 30 length (distance between short sides 13b, 13d) exceeds the length of the object 4 by approximately 10 %. Correspondingly, the gripper 30 width (distance between long sides 13a, 13c) exceeds the width of the object by approximately 10 %. The gripper 30 height is preferably at least half the height of the object 4 to be picked up. In the example of figure 2 (and figure 3), the gripper 30 height is approximately 75 % of the object 4 height. A preferred ratio range for gripper height vs object height is 30-80 %.

The inner member(s) 14 is adapted to generate a force between the outer rigid structure 13 and the object 4 when the object 4 is picked up or held by the gripper 30. In some embodiments, the inner member(s) 14 may be an electrically movable device, such as a pin mounted on a shaft driven by an electric motor attached to the outer rigid structure 13. Such a pin can be brought to engage the object 4 and thus generate a lateral force between the object 4 and the outer rigid structure 13.

In the present embodiment, the inner members 14 may be brought from a deactivated low-volume state to an activated high-volume state, and are realised in the form of inflatable members 14. Figure 5 illustrates the deactivated state of the gripper 30 and figure 6 illustrates the activated state of the gripper 30. In the deactivated state, the inflatable members 14 are essentially empty of fluid. In the activated state, the inflatable members 14 are filled with fluid.

In the present embodiment, the inner members 14 extend along essentially the whole length of the associated sides 13a, 13b of the outer rigid structure 13, more precisely along approximately 90 % of the sides 13a, 13b. The inner members 14 are in the form of hoses. In the vertical direction, the inner members 14 extend over only a fraction, approximately 20 %, of the gripper 30 height.

The robot comprises an air pump (not shown) for activating the gripper 30 by pumping air into the inflatable members 14 as is illustrated by the arrow pointing towards the air supply that leads to the upper inflatable member 14 in figure 6. As is also illustrated, the inflatable members 14 are connected in series allowing both to be filled with a single air supply. When an object 4 is to be picked up by the gripper 30, the gripper 30 is lowered down over the object 4 and subsequently the air pump is started. When the inflatable members 14 have been filled with air, the gripper 30 grips the object between the inflatable members 14 and the opposing walls 13c, d. The gripper 30 is then hoisted by means of the push-pull chin 12 and thus the object 4 is lifted. The inflatable members 14 are preferably made of a material with a relatively high coefficient of friction, such as rubber, allowing the object 4 to be lifted while reducing the requirement on the pressure within the activated inflatable members 14. The inflatable members may alternatively be supplied with any suitable gas (or liquid) other than air in order to change from a deactivated low-volume state to an activated high-volume state.

The gripper 30 comprises a contact element (not shown) on the inside of the upper wall (opposite the open side) which is adapted to detect the presence of an object 4. By means of the contact element, the robot 1 is able to determine when the gripper 30 has been sufficient lowered over an object 4 for the object 4 to be picked up. The robot 1 then signals to the pump increase the pressure inside the inflatable members 14. When the pump has operated for a pre-set amount of time, for example 0.5-2 seconds, the gripper 30 is activated and the robot 1 lifts the object 4. The pump may be deactivated shortly before or after lifting. In the case that contact element detects that the contact with the object 4 is no longer present, the robot 1 may stop the lifting movement.

In an alternative embodiment, the robot 1 may comprise a pressure sensor that detects the pressure inside the inflatable members 14 and in this way signals the robot 1 when the gripper 30 has been activated and the object 4 can be lifted.

The present fluid inflatable members 14 are arranged along two adjacent walls 13a, 13b of the outer rigid structure 13, more precisely along one long side 13a one short side 13b. This is beneficial since when the gripper 30 has been activated to lift an object, as shown in figure 6, that object 4 will be located in a corner of the gripper 30 and thus a control system of the robot 1 will know the location of a corner of the object 4.

The two inner flexible members 14 shown in figures 5 and 6 may be exchanged for one single inner flexible member that extends along the two sides 13a, 13b of the outer rigid structure 13. There may be a clamping structure arranged in the corner joining the two sides 13a, 13b of the outer rigid structure 13, said clamping structure holding the single inner flexible member in place but yet letting fluid pass such that the member may be fluidly inflated and deflated. In other embodiments, one or more inner flexible members are arranged internally of all four sides 13a-d of the outer rigid structure 13.

The manipulator 3 in form of a gripper 30 described above may also generally employed within the area of automated handling of stock-picking and need not be fitted to the above-described robot.

## Claims

1. A robot (1) for a warehouse storage rack (2) comprising a plurality of storage rack sections (2a-2i), said robot (1) being adapted to be mounted at an elevated position (7) within a storage rack section (2b) and comprising
- a manipulator (3) for picking up objects (4) within the storage rack section (2b) and
- manipulator guiding means (5) for movably supporting the manipulator (3), said manipulator guiding means (5) being configured such that the manipulator (3) can be brought to a lower position (8) than the elevated position (7).

2. The robot (1) of claim 1, the manipulator guiding means (5) being configured such that the manipulator (3) can be brought to any position within an area of a horizontal plane of the automated storage rack section (2b) and to a delivery area (6) located outside the area of the automated storage rack section (2b).

3. The robot (1) of claim 1 or 2, wherein the manipulator guiding means (5) comprises a manipulator support structure (12) supporting the manipulator (3), the manipulator support structure (12) being configured to be able to transfer a downward force to the manipulator (3) and thereby urge the manipulator (3) into engagement with an object (4).

4. The robot (1) of claim 3, wherein the manipulator support structure (12) is a push-pull chain.

5. The robot (1) of any preceding claim, wherein the manipulator guiding means (5) comprises an arm (9) which supports the manipulator (3), the manipulator guiding means (5) being configured such that the arm (9) is linearly movable along a longitudinal direction of the storage rack section (2b).

6. The robot (1) of claim 5, the manipulator guiding means (5) being configured such that the arm (9) is linearly movable along a transverse direction of the storage rack section (2b).

7. The robot (1) of claim 5 or 6, the manipulator guiding means (5) comprising an arm rotary joint mechanism (10), the arm (9) being rotatable in a horizontal plane by means of the manipulator rotary joint mechanism (10).

8. The robot (1) of any one of claims 5 to 7, wherein a manipulator rotary joint mechanism (11) is arranged between the arm (9) and the manipulator (3), the manipulator (3) being rotatable in a horizontal plane by means of the manipulator rotary joint mechanism (11).

9. The robot (1) of claim 3 or 4 and any one of claims 6 to 9, wherein the manipulator support structure (12) and the arm (9) are configured such that a portion of the manipulator support structure (12) can be retracted inside the arm (9).

10. The robot (1) of any preceding claim, wherein the manipulator (30) comprises
- a rigid outer manipulator structure (13) which is adapted to at least partially surround the object (4) to be picked and
- an inner member (14) which is adapted to generate a force between the rigid outer manipulator structure (13) and the object (4) such that the object (4) can be picked up by the manipulator (30).

11. The robot (1) of claim 10, wherein the inner member (14) or a plurality of inner members (14) are arranged along two adjacent walls (13a, 13b) of the rigid outer manipulator structure (13).

12. The robot (1) of claim 10 or 11, wherein the inner member (14) is an inflatable member.

13. A robot assembly comprising a robot (1) of any preceding claim and a robot guide structure (18) adapted to be mounted at an elevated position (7) of the storage rack section (2b) and to support the robot (1).

14. A warehouse storage rack (2) comprising a plurality of storage rack sections (2a-2i), said warehouse storage rack (2) comprising
- at least one storage rack section (2b) comprising a robot (1) according to any one of claims 1 to 12 mounted thereto, and
- at least one storage rack section (2a) not comprising a robot.

15. A method for automating a warehouse storage rack (2) comprising a plurality of storage rack sections (2a-2i), said method comprising the step of
- mounting a robot (1) to at least one of the storage rack sections (2b), said robot (1) comprising a manipulator (3) for picking up objects (4) stored in the storage rack section (2b), thereby providing at least one automated storage rack section (2b) and at least partly automating the warehouse storage rack (2).
